# EUROPÄISCHE PATENTSCHRIFT

(11) **EP 2 081 719 B1**
(45) Veröffentlichungstag und Bekanntmachung des Hinweises auf die Patenterteilung: **25.02.2015**
(21) Anmeldenummer: 07820409.6
(22) Anmeldetag: 20.09.2007
(51) Int. Cl.: B23D 51/02, B23Q 35/26

(54) **MOTORISCH BETRIEBENE HUBSÄGE, INSBESONDERE HUBSTICHSÄGE**
RECIPROCATING POWER SAW, ESPECIALLY JIGSAW
SCIE À MOUVEMENT ALTERNATIF ACTIONNÉE PAR MOTEUR, EN PARTICULIER SCIE SAUTEUSE

(30) Priorität: 20.10.2006 DE 102006049530
(43) Veröffentlichungstag der Anmeldung: 29.07.2009
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2007/059971
(87) Internationale Veröffentlichungsnummer: WO 2008/046712

(56) Entgegenhaltungen:
- CA-C- 2 267 576
- CH-A5- 618 914
- DE-A1- 10 300 793
- US-A- 3 435 523

## Beschreibung

Die Erfindung bezieht sich auf eine motorisch betriebene Hubsäge, insbesondere auf eine Hubstichsäge, nach dem Oberbegriff des Anspruches 1.

### Stand der Technik

Eine solche Vorrichtung ist aus US 3 435 523 bekannt.

In der DE 10 2004 045 539 A1 wird eine elektrische, handgeführte Hubstichsäge beschrieben, deren Sägeblatt eine oszillierende, auf- und abwärts gerichtete Hubbewegung gegenüber einer gehäusefesten Fußplatte ausführt, in die eine Durchtrittsöffnung für das Sägeblatt eingebracht ist. Die Unterseite der Fußplatte bildet eine Auflagefläche, über die die Hubstichsäge auf dem zu bearbeitenden Werkstück geführt ist.

Bei der Bearbeitung des Werkstücks wird die Hubstichsäge entlang einer definierten Bahnkurve geführt, um die gewünschte Kontur des Werkstückes zu herzustellen. Bei der Produktion mehrerer gleicher Werkstücke muss die Kurvenform mithilfe einer Schablone eingezeichnet werden, anschließend erfolgt das freihändige Aussägen mithilfe der Hubstichsäge. Hierdurch ergeben sich Abweichungen zwischen den verschiedenen, bearbeiteten Werkstücken, die zu einer zeitaufwändigen Nachbearbeitung führen.

### Offenbarung der Erfindung

Der Erfindung liegt die Aufgabe zugrunde, mit einfachen, konstruktiven Maßnahmen eine motorisch betriebene Hubsäge zu schaffen, die mit hoher Genauigkeit das Herstellen von Kopien gleichartiger Werkstücke erlaubt.

Diese Aufgabe wird erfindungsgemäß mit den Merkmalen des Anspruches 1 gelöst. Die Unteransprüche geben zweckmäßige Weiterbildungen an.

Bei der erfindungsgemäßen, motorisch betriebenen Hubsäge, insbesondere Hubstichsäge, ist in die Fußplatte ein Führungselement eingebracht, das über die Auflagefläche der Fußplatte hinausragt. Dieses Führungselement ist als Führungshülse ausgebildet und zur Anlage an einer Führungskontur einer Kopierschablone bestimmt, die mit dem zu bearbeitenden Werkstück verbunden ist. Die Sägezähne des Sägeblattes, das durch die Fußplatte hindurchgeführt ist, liegen zumindest annähernd im Mittelpunkt des Führungselementes bzw. sind seitlich versetzt zum Mittelpunkt des Führungselementes und zugleich in Höhe dieses Mittelpunktes - bezogen auf die Vorschubrichtung - angeordnet.

Gemäß einer ersten Ausführung der Erfindung, bei der die Sägezähne des Sägeblattes unmittelbar oder annähernd unmittelbar im Mittelpunkt des Führungselementes liegen, ist das Führungselement als Führungshülse ausgebildet, durch die das Sägeblatt hindurchgeführt ist. Diese Führungshülse liegt während des Betriebes der Hubsäge mit ihrer äußeren Mantelfläche an der Führungskontur der Kopierschablone an, wodurch automatisch die Führungskontur nachgefahren wird. Zu berücksichtigen ist lediglich der seitliche Versatz zwischen der Außenwandung der Führungshülse, die an der Wandung der Führungskontur anliegt, und dem Sägeblatt. Dieser Versatz kann aber ohne weiteres bei der Herstellung der Kopierschablone und/oder während der Bearbeitung des Werkstückes berücksichtigt werden. Da die Sägezähne des Sägeblattes im Bereich des Mittelpunktes der Führungshülse angeordnet sind, besitzt zum einen das Sägeblatt im Bereich seiner Sägezähne einen gleich bleibenden Abstand zu allen Wandabschnitten auf der Innenseite der Führungshülse, wodurch eine sichere Führung des Sägeblattes gewährleistet ist. Zum andern wird eine Winkelabweichung zwischen der Vorschubrichtung der handgeführten Hubsäge und der Ebene durch das Sägeblatt vermieden, die zu einem unsauberen, von dem gewünschten Bahnverlauf abweichenden Schnitt führen könnte. Bei der erfindungsgemäßen Ausführung liegt vielmehr die Vorschub- bzw. Schnittrichtung trotz des Anliegens an der Führungskontur der Kopierschablone in der Ebene des Sägeblattes. Entscheidend ist, dass der Kontaktpunkt zwischen der Außenwandung der Führungshülse und der Wandung an der Führungskontur der Kopierschablone in einer Senkrechten durch die Ebene des Sägeblattes in Höhe der Sägezähne liegt.

Gemäß zweckmäßiger Weiterbildung ist vorgesehen, dass das Führungselement lösbar an der Fußplatte gehalten ist. Dies ermöglicht in einfacher Weise einen Austausch eines ersten Führungselementes durch ein zweites in anderer geometrischer Gestalt, beispielsweise um verschiedenartigen Konturverläufen besser Rechnung tragen zu können. Vorteilhaft an dieser Ausführung ist auch die Möglichkeit des nachträglichen Einbaus des Führungselementes in die Fußplatte einer handgeführten Hubsäge.

Die Führungshülse weist vorteilhaft eine radial auskragende Ringschulter auf, die in einer komplementär geformten, ringförmigen Ausnehmung in der Fußplatte aufgenommen ist. Diese Ringschulter erleichtert die Befestigung der Führungshülse an der Fußplatte, beispielsweise dergestalt, dass Bohrungen in die Ringschulter eingebracht sind, über die die Führungshülse mithilfe von Schrauben an der Fußplatte befestigt ist.

Es kann außerdem zweckmäßig sein, die Fußplatte mit einem erhöhten Aufnahmedom zu versehen, der zur Aufnahme des Führungselementes hergerichtet ist. Insbesondere für den Fall einer Ausführung des Führungselementes als Führungsstift ist dieser vorteilhafterweise in dem Dom aufgenommen, wobei der untere Abschnitt des Führungsstiftes über die Auflagefläche der Fußplatte hinausragt, um sicherzustellen, dass eine Anlage dieses Abschnittes des Führungsstiftes an der Kontur der Schablone möglich ist.

Gemäß einer weiteren vorteilhaften Ausführung ist an der Fußplatte ein Wälzlager zum Abrollen an der Führungskontur der Kopierschablone vorgesehen. Dieses Wälzlager umgreift vorteilhafterweise das Führungselement in konzentrischer Weise, so dass die grundsätzlichen Winkelverhältnisse zwischen der Sägeblattebene und der Vorschubrichtung beibehalten werden. Das Wälzlager bewirkt lediglich einen geringfügig größeren seitlichen Versatz zwischen der Kontur der Kopierschablone und der Sägeblattebene, was jedoch durch eine entsprechende Relativanordnung zwischen Kopierschablone und zu bearbeitendem Werkstück berücksichtigt werden kann. Das Wälzlager reduziert dafür die für die die Vorschubbewegung des Handwerkzeugs erforderlichen Kräfte.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung eine Seitenansicht einer Hubstichsäge mit einer auf der Unterseite des Gehäuses angeordneten Fußplatte, die eine Durchtrittsöffnung für das Sägeblatt aufweist,
- Fig. 2: einen Schnitt durch die Fußplatte mit einer Darstellung einer Führungshülse als Führungselement, durch die das Sägeblatt hindurchgeführt ist und die für die Führung entlang einer Führungskontur einer Kopierschablone bestimmt ist,
- Fig. 3: einen Schnitt durch die Fußplatte einer Hubstichsäge in einer detaillierteren Darstellung einschließlich einer Kopierschablone und einem zu bearbeitenden Werkstück,
- Fig. 4: Fußplatte und Sägeblatt einschließlich Führungshülse der Ausführung aus Fig. 3 in Draufsicht mit eingezeichnetem, gekrümmtem Verlauf der Führungskontur der Kopierschablone,
- Fig. 5: im Schnitt eine Hubstichsäge mit einer Führungshülse in der Fußplatte und einem die Führungshülse umgreifenden Wälzlager,
- Fig. 6: ein weiteres Beispiel einer Hubstichsäge die nicht Teil der Erfindung ist, dargestellt im Schnitt, mit einem als Führungsstift ausgeführten Führungselement, das mit seitlichem Versatz zum Sägeblatt angeordnet ist.

In den Figuren sind gleiche Bauteile mit gleichen Bezugszeichen versehen.

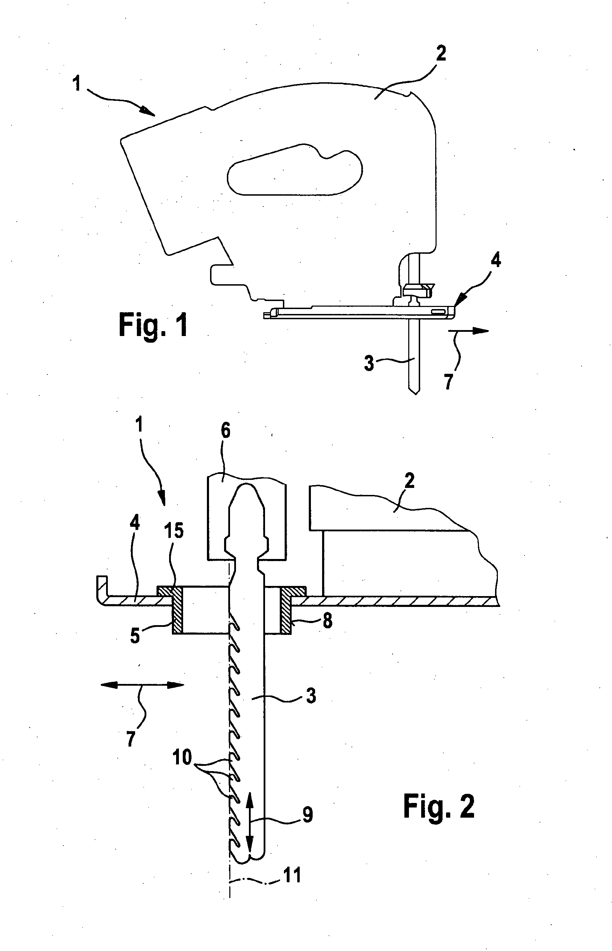

Bei der in Fig. 1 dargestellten Handwerkzeugmaschine handelt es sich um eine elektrische Hubstichsäge 1 mit einem Gehäuse 2 und einem Sägeblatt 3, das eine vertikal oszillierende Hubbewegung ausführt und durch eine Öffnung in einer Fußplatte 4 hindurchgeführt ist, welche fest mit dem Gehäuse 2 der Hubstichsäge verbunden ist. Die Vorschub- bzw. Arbeitsrichtung der Hubstichsäge 1 ist mit dem Pfeil 7 gekennzeichnet. Die dem Gehäuse 2 abgewandte Unterseite der Fußplatte 4 bildet eine Auflagefläche, die im Betrieb der Hubstichsäge auf einem zu bearbeitenden Werkstück oder einer Kopierschablone aufliegt.

Wie der Schnittdarstellung nach Fig. 2 zu entnehmen, ist in eine Ausnehmung in der Fußplatte 4 eine Führungshülse 5 eingebracht, durch die das Sägeblatt 3 hindurchgeführt ist. Bei der Ausnehmung in der Fußplatte 4, in die die Führungshülse 5 eingesetzt ist, handelt es sich insbesondere um die Durchtrittsöffnung in der Fußplatte für das Sägeblatt, wodurch die Möglichkeit ermöglicht ist, nachträglich eine Führungshülse 5 einzusetzen. Die Führungshülse 5 ragt über die untere Auflagefläche der Fußplatte 4 hinaus und hat die Aufgabe einer Kopierhülse, indem die äußere Mantelfläche 8 der Führungshülse 5 an einer Führungskontur einer Kopierschablone entlanggeführt wird, wobei die Kopierschablone fest mit dem zu bearbeitenden Werkstück verbunden ist. Eingezeichnet ist in Fig. 2 auch eine Halterung 6 zur Halterung des Sägeblattes 3, über diese Halterung 6 wird auch die Arbeitsbewegung auf das Sägeblatt 3 aufgebracht, die mit dem Doppelpfeil 9 gekennzeichnet ist.

Die Position des Sägeblattes 3 innerhalb der Führungshülse 5 ist so gewählt, dass die Sägezähne 10 des Sägeblattes unmittelbar entlang der Längsachse 11 durch die Führungshülse 5 verlaufen. Die Sägezähne 10 liegen also genau im Mittelpunkt der Führungshülse 5.

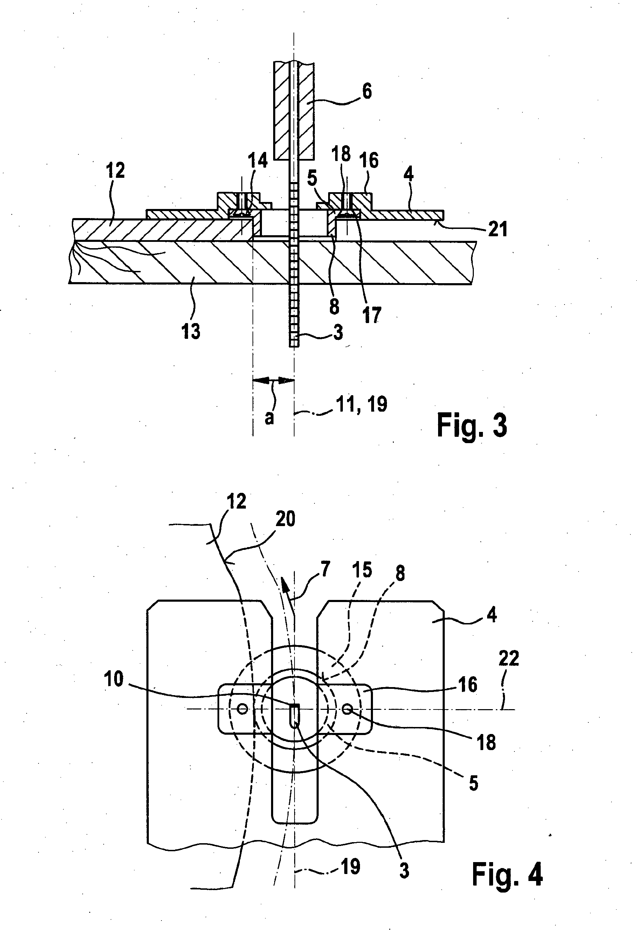

Wie der detaillierteren Darstellung der Fig. 3 und 4 zu entnehmen, weist die Führungshülse 5 eine radial auskragende Ringschulter 15 auf, über die die Führungshülse an der Fußplatte 4 befestigt ist. Die Fußplatte 4 besitzt einen erhöhten Absatz 16, auf dessen Unterseite eine ringförmige Ausnehmung 17 eingebracht ist, die zur Aufnahme der Ringschulter 15 der Führungshülse 5 ausgebildet ist. Über die Ringschulter 15 erfolgt die Befestigung der Führungshülse mithilfe von Senkschrauben 14, die durch Ausnehmungen in der Ringschulter 15 geführt und in Gewindebohrungen 18 in dem Absatz 16 der Fußplatte 4 eingeschraubt sind.

Die Unterseite der Fußplatte 4 bildet die Auflagefläche 21 zur Auflage der Hubstichsäge auf einer Kopierschablone 12, die fest mit dem zu bearbeitenden Werkstück 13 verbunden ist. Die seitliche Kontur der Kopierschablone 12 bildet eine Führungskontur 20 für die äußere Mantelfläche 8 an der Führungshülse 5. Die Führungskontur 20 an der Kopierschablone 12 kann einen gekrümmten Verlauf einnehmen; aufgrund des runden Querschnittes der Führungshülse 5 kann diese dem Verlauf der Führungskontur 20 problemlos folgen. Dadurch wird der Verlauf der Führungskontur 20 auch in dem zu bearbeitenden Werkstück 13 abgebildet, jedoch mit einem seitlichen Versatz a, welcher den Abstand zwischen der Längsachse 11 der Führungshülse 5 und der äußeren Mantelfläche 8 bezeichnet, die im Betrieb der Hubstichsäge an der Führungskontur 20 anliegt. Die Längsachse 11 der Führungshülse 5 liegt zugleich in der Sägeblattebene 19 des Sägeblattes 3. Der Kontaktpunkt zwischen der äußeren Mantelfläche 8 an der Führungshülse 5 und der Führungskontur 20 in der Kopierschablone 12 liegt in einer Senkrechten 22 durch die Sägeblattebene 19 in Höhe des Mittelpunktes der Führungshülse 5, also in Höhe der Längsachse 11.

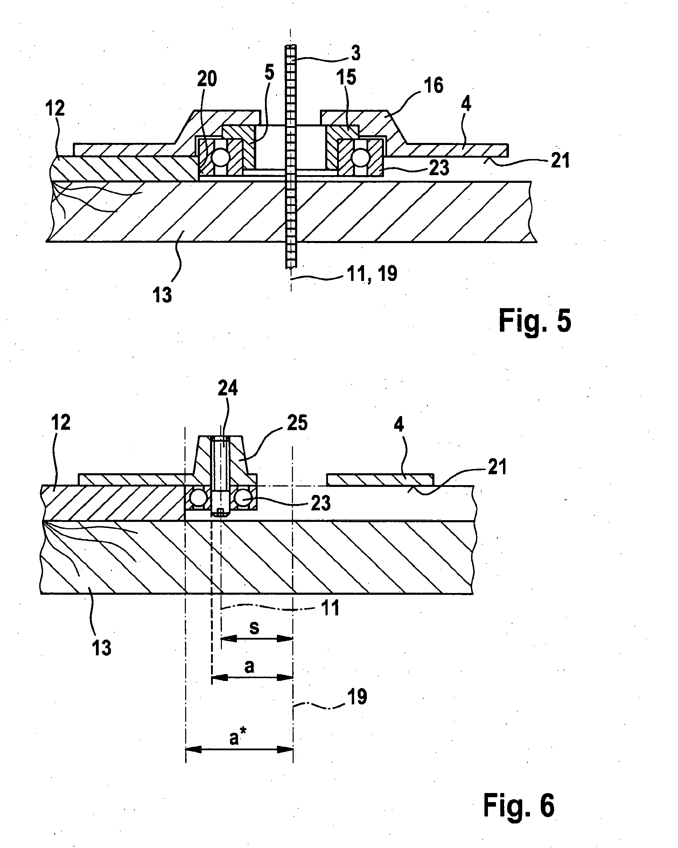

Das Ausführungsbeispiel nach Fig. 5 ähnelt grundsätzlich demjenigen nach den Fig. 3 und 4, jedoch mit dem Unterschied, dass die Führungshülse 5 von einem Wälzlager 23 umgriffen ist, deren radiale Außenseite an der Führungskontur der Kopierschablone 12 anliegt und eine Abrollfläche bildet, wodurch der Widerstand in Vorschubrichtung reduziert ist. Auch das Wälzlager 23 ist in eine ringförmige Ausnehmung eingepasst, die sich auf der Unterseite der Fußplatte 4 befindet.

In Fig. 6 ist ein weiteres Beispiel dargestellt. Das Führungselement, welches zur Anlage und Führung an der Führungskontur der Kopierschablone 12 bestimmt ist, ist als Führungsstift 24 ausgeführt, der in einem erhöhten Aufnahmedom 25 aufgenommen ist, welcher einteilig mit der Fußplatte 4 ausgebildet ist. Der Abstand zwischen der Längsachse 11 durch den Führungsstift 24 und der Sägeblattebene 19 durch das Sägeblatt ist mit s gekennzeichnet, der Abstand zwischen der äußeren Mantelfläche am Führungsstift 24 und der Sägeblattebene 19 mit a. Der Führungstift liegt somit seitlich versetzt zum Sägeblatt 3, jedoch in der Weise, dass die Längsachse 11 in einer Senkrechten zur Sägeblattebene 19 liegt, und zwar in Höhe der Sägezähne des Sägeblattes, bezogen auf die Vorschubrichtung.

Ein zusätzliches Wälzlager 23 kann vorgesehen sein, das den Abschnitt des Führungsstiftes 24 umgreift, der über die untere Auflagefläche 23 an der Fußplatte 4 übersteht. In diesem Fall ist der Abstand zwischen der äußeren Mantelfläche an dem Wälzlager 23, die zur Anlage an der Führungskontur der Kopierschablone 12 gelangt, und der Sägeblattebene 19 mit a* gekennzeichnet.

## Patentansprüche

1. Motorisch betriebene, handgeführte Hubsäge, insbesondere Hubstichsäge (1), mit einem eine Arbeitsbewegung ausführenden Sägeblatt (3) und mit einer mit dem Gehäuse (2) der Hubsäge verbundenen Fußplatte (4), deren Unterseite eine dem zu bearbeitenden Werkstück (13) zugewandte Auflagefläche (21) bildet, wobei in die Fußplatte (4) ein Führungselement (5) eingebracht ist, **dadurch gekennzeichnet, dass** das Führungselement (5) als Führungshülse (5) ausgebildet ist, die über die Auflagerfläche (21) der Fußplatte (4) hinausragt, wobei die Führungshülse (5) zur Anlage an eine Führungskontur (20) einer Kopierschablone (12) bestimmt ist, die mit dem Werkstück (13) verbunden ist, und dass die Sägezähne (10) des Sägeblattes (3) zumindest annähernd im Mittelpunkt der Führungshülse (5) liegen bzw. bezogen auf die Sägeblattsebene des Sägeblattes (3) seitlich versetzt zum Mittelpunkt angeordnet sind.

2. Hubsäge nach Anspruch 1,
**dadurch gekennzeichnet, dass** das Führungshülse (5) lösbar an der Fußplatte (4) gehalten ist.

3. Hubsäge nach Anspruch 1 oder 2,
**dadurch gekennzeichnet, dass** das Sägeblatt (3) durch die Führungshülse (5) hindurchgeführt ist.

4. Hubsäge nach Anspruch 1 bis 3,
**dadurch gekennzeichnet, dass** die Führungshülse (5) eine radial auskragende Ringschulter (15) aufweist, die in einer ringförmigen Ausnehmung (17) in der Fußplatte (4) aufgenommen ist.

5. Hubsäge nach einem der Ansprüche 1 bis 4,
**dadurch gekennzeichnet, dass** an der Fußplatte (4) ein Wälzlager (23) zum Abrollen an der Führungskontur (20) der Kopierschablone (12) vorgesehen ist.

6. Hubsäge nach Anspruch 5,
**dadurch gekennzeichnet, dass** das Wälzlager (23) das Führungshülse (5) konzentrisch umgreift.

## Claims

1. Motor-driven, handheld reciprocating saw, in particular reciprocating jigsaw (1), having a saw blade (3) that executes a working movement, and having a foot plate (4) which is connected to the housing (2) of the reciprocating saw and the underside of which forms a bearing surface (21) facing the workpiece (13) to be machined, wherein a guide element (5) has been introduced into the foot plate (4), **characterized in that** the guide element (5) is configured as a guide sleeve (5) which projects beyond the bearing surface (21) of the foot plate (4), wherein the guide sleeve (5) is intended to rest against a guide contour (20) of a template (12) which is connected to the workpiece (13), and **in that** the sawteeth (10) of the saw blade (3) are located at least approximately at the midpoint of the guide sleeve (5), or are arranged in a manner laterally offset from the midpoint with respect to the saw blade plane of the saw blade (3).

2. Reciprocating saw according to Claim 1, **characterized in that** the guide sleeve (5) is held releasably on the foot plate (4).

3. Reciprocating saw according to Claim 1 or 2, **characterized in that** the saw blade (3) is guided through the guide sleeve (5).

4. Reciprocating saw according to Claims 1 to 3, **characterized in that** the guide sleeve (5) has a radially projecting annular shoulder (15) which is received in an annular recess (17) in the foot plate (4).

5. Reciprocating saw according to one of Claims 1 to 4,
**characterized in that** a roller bearing (23) for rolling on the guide contour (20) of the template (12) is provided on the foot plate (4).

6. Reciprocating saw according to Claim 5, **characterized in that** the roller bearing (23) engages concentrically around the guide sleeve (5).

## Revendications

1. Scie à mouvement alternatif à main actionnée par moteur, en particulier scie sauteuse à mouvement alternatif (1), comprenant une lame de scie (3) effectuant un mouvement de travail et comprenant une plaque de base (4) reliée au boîtier (2) de la scie à mouvement alternatif, le côté inférieur de la plaque de base formant une surface d'appui (21) tournée vers la pièce (13) à usiner, un élément de guidage (5) étant inséré dans la plaque de base (4), **caractérisée en ce que** l'élément de guidage (5) est réalisé sous forme de douille de guidage (5) qui fait saillie au-delà de la surface d'appui (21) de la plaque de base (4), la douille de guidage (5) étant destinée à venir en appui contre un contour de guidage (20) d'un gabarit de copiage (12) qui est relié à la pièce (13), et **en ce que** les dents de scie (10) de la lame de scie (3) se situent au moins approximativement au centre de la douille de guidage (5) ou sont disposées de manière décalée latéralement par rapport au centre relativement au plan de la lame de scie (3).

2. Scie à mouvement alternatif selon la revendication 1,
**caractérisée en ce que** la douille de guidage (5) est maintenue de manière amovible sur la plaque de base (4).

3. Scie à mouvement alternatif selon la revendication 1 ou 2,
**caractérisée en ce que** la lame de scie (3) est guidée à travers la douille de guidage (5).

4. Scie à mouvement alternatif selon les revendications 1 à 3,
**caractérisée en ce que** la douille de guidage (5) comprend un épaulement annulaire (15) saillant radialement, lequel est reçu dans un évidement annulaire (17) dans la plaque de base (4).

5. Scie à mouvement alternatif selon l'une quelconque des revendications 1 à 4,
**caractérisée en ce qu'**un palier à roulement (23) pour le roulement sur le contour de guidage (20) du gabarit de copiage (12) est prévu sur la plaque de base (4).

6. Scie à mouvement alternatif selon la revendication 5,
**caractérisée en ce que** le palier à roulement (23) entoure la douille de guidage (5) de manière concentrique.
